# FASCICULE DE BREVET EUROPEEN

(11) **EP 2 614 708 B1**
(45) Date de publication et mention de la délivrance du brevet: **10.09.2014**
(21) Numéro de dépôt: 13151495.2
(22) Date de dépôt: 16.01.2013
(51) Int. Cl.: A01K 39/012

(54) **Installation pour l'alimentation de volailles comprenant au moins une ligne d'alimentation incluant un tube convoyeur auquel sont fixées des mangeoires**
Anlage zum Füttern von Geflügel, die mindestens eine Futterlinie mit einem Förderrohr umfasst, an das Futtertröge befestigt sind
Poultry-feeding plant including at least one supply line including a conveyor tube to which the feeders are secured

(30) Priorité: 16.01.2012 FR 1250385
(43) Date de publication de la demande: 17.07.2013
(73) Titulaire: Etablissements Le Roy, 35530 Noyal-Sur-Vilaine (FR)
(72) Inventeur: Le Roy, Nicolas, 35200 RENNES (FR)
(74) Mandataire: Larcher, Dominique

(56) Documents cités:
- WO-A1-00/49857
- DE-C1- 4 103 702
- US-A- 2 464 653
- US-A- 3 033 163
- US-A- 4 083 588
- US-A1- 2011 018 263

## Description

### 1. Domaine de l'invention

L'invention concerne le domaine de la conception et de la réalisation des installations pour l'alimentation des volailles destinées à équiper des bâtiments d'élevage.

Plus précisément, l'invention concerne une installation du type de celles comprenant au moins une ligne d'alimentation incluant un tube convoyeur auquel sont fixées des mangeoires et pouvant être relevée grâce à un système de câbles actionné par un treuil. En pratique ce système de câbles inclut un câble principal horizontal dont chacune des extrémités est reliée aux extrémités d'au moins un tube convoyeur et auquel sont fixés des câbles de suspension supportant ce tube convoyeur. L'actionnement du treuil déclenche l'enroulement ou le déroulement du câble principal et donc respectivement le relèvement ou l'abaissement du tube convoyeur supportant les mangeoires.

### 2. Art antérieur

Ces lignes d'alimentation, bien connues de l'art antérieur, incluent à leurs extrémités une trémie contenant de l'aliment et un moteur permettant de faire tourner une vis sans fin prévue à l'intérieur du tube convoyeur pour amener aux mangeoires les quantités d'aliment nécessaires. A cet effet les tubes convoyeurs sont percés d'orifice par lesquels l'aliment peut se déverser dans les mangeoires.

Ces lignes d'alimentation peuvent être plus ou moins relevées en fonction du type de volailles élevées ou de leur âge. Ainsi pour des volailles de petites tailles, telles que par exemple des poussins, les lignes d'alimentation sont abaissées de façon telle que les mangeoires reposent au sol. Lorsque les volailles grandissent, les lignes d'alimentation et donc les mangeoires sont relevées au fur et à mesure de la croissance de celles-ci de façon à correspondre au mieux à leur comportement alimentaire et ainsi participer au gain de productivité de l'élevage. En général, les mangeoires ne sont pas fixes par rapport au tube convoyeur mais peuvent se balancer légèrement sur celui-ci de façon à faciliter les opérations de maintenance devant être effectuées dans les bâtiments d'élevage et la circulation des volailles. Toutefois, pour l'élevage de coqs reproducteurs, les mangeoires doivent être fermement fixées au tube convoyeur de façon à empêcher les mouvements de balancement des mangeoires qui pourraient conduire au déversement de l'aliment hors de celles-ci sous l'effet des violents coup de becs qui caractérisent la façon de se nourrir de ce type de volailles.

L'amplitude d'élévation de telles lignes d'alimentation est généralement conçue pour pouvoir s'adapter à l'élevage de différents types de volailles (poulets, coqs, dindes). Il est en effet courant, notamment pour des raisons d'ordre sanitaire, d'alterner les types de volailles élevées dans un même bâtiment d'élevage. Cette amplitude est également conçue pour pouvoir relever les lignes d'alimentation à une hauteur suffisamment élevée dans le bâtiment pour permettre le passage d'engins motorisés dans celui-ci. De tels engins sont notamment utilisés pour le changement des litières.

Les tubes convoyeurs de ces lignes d'alimentation sont en pratique constitués par l'association de plusieurs portions de tube en métal, préférentiellement de l'acier galvanisé, reliés bout à bout ou encore coopérant entre eux par une liaison mâle femelle. Lorsque les portions de tubes sont reliées bout à bout, des raccord tubulaires généralement également en métal, par exemple en acier inoxydable, sont prévus au niveau de la jonction entre les portions de tubes. Lorsque ces portions de tubes coopèrent entre eux par une liaison mâle femelle, des colliers de serrage sont prévus au niveau de la jonction.

Un problème posé par ce type d'installation réside dans le fait que les portions de tube constituant le tube convoyeur peuvent tourner les unes par rapport aux autres sous l'effet de forces qui leurs sont transmises. Ceci est particulièrement observé avec certaines volailles telles que les coqs qui s'alimentent par de violents coups de bec créant des forces sur les mangeoires qui sont transmises aux portions de tube convoyeur associées auxquelles ces mangeoires sont fixées. Au bout d'un certain temps, au moins certaines des mangeoires de la ligne d'alimentation peuvent ainsi se retrouver plus ou moins inclinées. Une telle inclinaison peut conduire à une perte d'aliment et nécessiter l'intervention d'un opérateur visant à replacer les portions de tubes et les mangeoires associées dans le bon axe.

Par ailleurs, au moins à l'issue de chaque campagne d'élevage, c'est-à-dire en pratique deux à sept fois par an, les mangeoires doivent être nettoyées par lavage abondant à l'eau. Pour des raisons évidentes d'ergonomie, ce travail est préférentiellement effectué en relevant à une hauteur adéquate les lignes d'alimentation afin que les mangeoires puissent être nettoyées à l'aide d'un jet d'eau par un opérateur sans que celui ait à se baisser. Afin de nettoyer au mieux ces mangeoires, il est connu d'utiliser des moyens permettant, après avoir relevé une ligne d'alimentation, de faire tourner le tube convoyeur de celle-ci sur lui-même, cette rotation entraînant le pivotement de l'ensemble des mangeoires dans une position facilitant leur nettoyage, selon laquelle les assiettes des mangeoires se trouvent dans une position sensiblement perpendiculaire au sol. Dans cette position, l'intérieur de chaque assiette est exposé à l'opérateur et peut être facilement et efficacement nettoyé. Une telle position des mangeoires en position de nettoyage facilite également l'égouttage et le séchage de celles-ci. Une telle technique est notamment décrite dans WO-A-0049857.

Dans ce type d'installations, selon lesquelles une rotation du tube convoyeur est prévue, la force de rotation doit être transmise aux différentes portions de tube constituant le tube convoyeur de façon telle que toutes les mangeoires d'une ligne d'alimentation puissent être concomitamment placées en position de nettoyage. Or, ces portions de tubes, ou les raccords tubulaires prévus à leur jonction, sont habituellement en métal. La nature lisse des surfaces métalliques de ces éléments est peu propice à la transmission efficace de cette force de rotation au niveau de la jonction des portions de tube constituant le tube convoyeur. De plus, chaque portion de tube supporte plusieurs mangeoires dont le poids cumulé peut être relativement élevé. En pratique, on observe donc fréquemment une mauvaise transmission de la force de rotation appliquée au tube convoyeur au niveau de ces jonctions, certaines portions de tubes ne tournant alors pas avec les autres et les mangeoires associées ne se plaçant donc en conséquence pas dans la position de nettoyage. De plus, les mangeoires mises en position de nettoyage voient leur centre de gravité décalé par rapport à l'axe longitudinal du tube convoyeur. Leur poids fait qu'elles tendent à revenir dans une position gravitaire dans laquelle leur centre de gravité se situe dans le plan vertical passant par cet axe. La force de gravité qui s'exerce sur les mangeoires en position de nettoyage est donc contraire à la force de rotation appliquée au tube convoyeur. Si une mauvaise transmission de cette force de rotation est observée au niveau des jonctions des portions de tube, certaines mangeoires peuvent revenir dans leur position gravitaire ou dans une position proche de celle-ci. Plus les lignes d'alimentation sont longues, c'est-à-dire plus le nombre de portions de tube constituant leur tube convoyeur est élevé, plus le risque de survenue de ce problème est élevé.

Afin, de tenter de contrer ce problème, il a été proposé de doter les lignes d'alimentation de volailles dans lesquelles une rotation du tube convoyeur sur lui-même est prévue, d'un ensemble formant levier. Un tel ensemble formant levier comprend une prise de levier solidarisée fixement à une portion du tube convoyeur, un bras de levier dont une des extrémités est conçue pour être introduite dans cette prise de levier et dont l'autre extrémité est pourvue de moyens d'accrochage. En pratique, le treuil est actionné de façon à enrouler le câble principal pour relever le tube convoyeur de façon telle que les mangeoires soient au moins à hauteur d'homme, c'est-à-dire à une hauteur optimisée permettant leur nettoyage aisé par un opérateur. Ensuite, afin de placer les mangeoires en position de nettoyage, l'opérateur introduit l'extrémité du levier dans la prise de levier, actionne ce levier vers le haut pour faire pivoter le tube convoyeur sur lui-même et entraîner les mangeoires grâce à des butées prévues sur le tube convoyeur, puis accroche l'extrémité de ce bras de levier à un point d'un câble de suspension du tube convoyeur relié au câble principal. Ce point du câble de suspension en question est prévu à une distance du point d'accrochage de ce tube de suspension au tube convoyeur qui correspond à peu près à la longueur du bras de levier. Les mangeoires sont ainsi maintenues en position de nettoyage et l'opérateur peut procéder à celui-ci. Dans cette position de nettoyage, le bras de levier se trouve en position quasi verticale et exerce sur le tube convoyeur une force qui présente une composante s'opposant au retour en position gravitaire des mangeoires.

Un premier inconvénient des installations pourvues d'un tel ensemble formant levier résulte du fait que l'extrémité du bras de celui-ci doit être fixée à un point d'un câble de suspension du tube convoyeur pour maintenir les mangeoires en position de nettoyage. De ce fait, ce câble de suspension ploie sous l'effet du poids des mangeoires et du tube convoyeur. Pour compenser ce ploiement du câble de suspension et faire en sorte que les assiettes des mangeoires soient effectivement dans une position sensiblement perpendiculaire au sol dans la position de nettoyage des mangeoires lorsque le levier est accroché au câble de suspension, la force exercée sur ce bras de levier accroché au câble doit être supérieure à la force qui serait nécessaire au positionnement des mangeoires en position de nettoyage si ce câble ne ployait pas. La force supplémentaire nécessaire exercée sur le bras de levier concourre à favoriser la mauvaise transmission de la force de rotation de la portion de tube pourvue de la prise de levier au reste du tube convoyeur.

Un second inconvénient des installations de l'art antérieur pourvues d'un tel ensemble formant levier survient lorsque la ligne d'alimentation est installée dans un bâtiment bas de plafond, ce qui est fréquent dans certaines zones d'exploitation. Dans une telle configuration de bâtiment, lorsque la ligne d'alimentation est relevée à son maximum pour autoriser le passage des engins motorisées utilisés notamment pour le changement des litières, il n'est pas possible d'avoir préalablement positionnées les mangeoires en position de nettoyage à l'aide du levier, car celui-ci en position quasi verticale viendrait alors en butée contre le plafond du bâtiment.

### 3. Objectifs de l'invention

L'invention a notamment pour objectif de palier ces inconvénients de l'art antérieur.

Plus précisément, un objectif de l'invention est de fournir une installation pour l'alimentation de volailles destinée à équiper un bâtiment d'élevage incluant au moins une ligne d'alimentation relevable grâce à un treuil, dans laquelle les différentes portions de tube constituant le tube convoyeur présentant un risque minimisé de tourner les unes par rapport aux autres.

Egalement un objectif de l'invention est de fournir, dans au moins un mode de réalisation, une installation de ce type dans laquelle la mise en rotation du tube convoyeur sur lui-même implique un risque minimisé de voir les différentes portions de tube constituant le tube convoyeur tourner les unes par rapport aux autres.

Egalement un objectif de l'invention est de fournir, dans au moins un mode de réalisation, une telle installation qui soit simple à mettre en oeuvre.

Encore un objectif de l'invention est de fournir, dans au moins un mode de réalisation, une telle installation qui n'implique pas, à capacité constante, un surcoût de fabrication important par rapport aux installations de l'art antérieur.

### 4. Exposé de l'invention

Ces objectifs, ainsi que d'autres qui apparaîtront par la suite sont atteints grâce à l'invention qui concerne une installation pour l'alimentation de volailles destinée à équiper un bâtiment d'élevage incluant au moins une ligne d'alimentation relevable grâce à un treuil actionnant un câble principal auquel ladite ligne d'alimentation est reliée, ladite ligne d'alimentation comprenant une pluralité de mangeoires fixées à un tube convoyeur d'aliment et des moyens de distribution dudit aliment dans lesdites mangeoires, ledit tube convoyeur d'aliment étant relié audit câble principal par des câbles de suspension et étant composé d'une pluralité de portions de tube reliées les unes aux autres, ladite installation étant pourvue de moyens permettant la mise en rotation sur lui-même dudit tube convoyeur, ou d'une section de celui-ci, de façon à organiser le pivotement desdites mangeoires.

Selon l'invention, l'installation est **caractérisée en ce que** lesdits moyens de mise en rotation comprennent au moins un ensemble formant levier incluant une barre de levier dont une extrémité est destinée à coopérer avec une prise de levier fixée audit tube convoyeur, et un câble de liaison relié à l'une de ses extrémités au câble principal et destiné à être relié par l'autre de ses extrémités à l'autre extrémité dudit bras de levier, ledit câble de liaison étant indépendant des câbles de suspension du tube convoyeur.

Ainsi, selon l'invention, les mangeoires peuvent être placées en position de nettoyage en actionnant le bras de levier et les mangeoires peuvent être maintenues dans cette position en solidarisant l'extrémité du bras de levier à l'extrémité du câble de liaison. Ainsi, le bras de levier n'est pas relié selon l'art antérieur à un point d'un câble de suspension du tube convoyeur mais à une extrémité d'un câble de liaison indépendant de tout câble de suspension.

Ainsi, le bras de levier étant relié, en position de nettoyage des mangeoires, à une extrémité de câble et non, selon l'art antérieur à un point d'un câble prévu à une distance de son extrémité correspondant à la longueur du bras de levier entraînant le ploiement de ce câble, il n'est pas nécessaire d'appliquer à ce bras de levier une force supérieure à celle nécessaire au positionnement des mangeoires en position de nettoyage, puisqu'aucun ploiement de câble n'est à compenser. Ainsi aucune force supplémentaire n'est exercée sur le bras de levier qui concourrait à favoriser la mauvaise transmission de la force de rotation de la portion de tube pourvue de la prise de levier au reste du tube convoyeur.

De plus, le câble de liaison étant relié par une de ses extrémités libres au câble principal, les moyens formant levier peuvent être actionnés quel que soit le niveau de relèvement du tube convoyeur. De cette façon, le bras de levier peut être actionné de façon telle que, lorsqu'il maintient les mangeoires en position de nettoyage, il ne se trouve pas en position trop relevée pour être gênant par rapport à la hauteur du bâtiment d'élevage. Un tel ensemble formant levier peut donc être mis en oeuvre même si ce bâtiment est bas de plafond

Selon une variante, ledit câble de liaison est relié au câble principal par l'intermédiaire d'une poulie. Cette poulie pourra être fixée à un élément fixe du bâtiment d'élevage tel que le plafond, directement ou grâce à un câblot.

Grâce à une telle poulie, la tension exercée sur le câble principal par le bras de levier est minimisée.

Selon une variante de l'invention, des joints anti-rotation sont prévus au niveau des jonctions des portions de tube constituant le tube convoyeur. De tels joints contribuent à empêcher la rotation de ces portions de tube les unes par rapport aux autres et permettent ainsi d'éviter les inconvénients décrits ci-dessus provoqués par une telle rotation.

Il pourra être envisagé de réaliser les joints anti-rotation en différents matériaux.

Toutefois, préférentiellement, lesdits joints anti-rotation sont constitués en un matériau choisi dans le groupe constitué par les matériaux élastomères et les polymères souples.

D'une façon encore davantage préférée, lesdits joints anti-rotation sont constitués en un matériau choisi dans le groupe constitué par le SBR (styrene butadiene rubber), l'EPDM (éthylène propylène diène monomère), les copolymères de polypropylène et les PVC souples.

Ainsi, on pourra avantageusement utiliser des joints, par exemple en matériau SBR, disponibles sur le marché à titre de joints d'étanchéité aux liquides et initialement destinés à équiper les raccords d'étanchéité aux liquides.

Selon une variante de l'invention, lesdites portions de tube dudit tube convoyeur présentent des extrémités mâle et femelle et ledit joint anti-rotation est installé entre l'extrémité male d'une portion de tube et l'extrémité femelle d'une autre portion de tube qui lui est associée. Ainsi, le contact entre la surface intérieure métallique de l'extrémité femelle d'une portion de tube et la surface extérieure métallique de l'extrémité mâle d'une autre portion de tube qui lui est associée est évitée et, corollairement, la rotation entre les portions de tube est très fortement minimisée.

Selon une autre variante de l'invention, lesdites portions de tube dudit tube convoyeur sont de même diamètre et sont reliées entre elles par des raccords tubulaires métalliques équipés dudit joint anti-rotation. Ainsi, le contact entre la surface intérieure métallique des raccords tubulaires et la surface métallique des portions de tube raccordées est évité et, corollairement, la rotation entre les portions de tube est également très fortement minimisée.

Egalement selon une variante, ledit joint anti-rotation présente, sur au moins une de ses faces, des aspérités. De telles aspérités permettent d'augmenter encore les propriétés anti-rotation du joint. Elles pourront être présentes sur l'une seulement ou sur les deux faces du joints d'étanchéité.

On notera que l'on pourra prévoir, notamment dans les installations présentant des lignes d'alimentation particulièrement longues, et donc particulièrement lourdes, plusieurs ensembles formant leviers répartis sur la longueur de telles lignes, chaque ensemble formant levier étant alors dédié à la rotation d'une section seulement dudit tube convoyeur, chaque section incluant plusieurs portions de tube. L'actionnement des leviers de chacun de ces ensembles requerra alors que les différentes sections de tubes puissent être mises en rotation indépendamment les unes des autres.

Dans ce cadre, les jonctions entre ces sections pourront être conçues pour permettre cette rotation, tout en assurant le centrage et le guidage des extrémités de celles-ci. Des raccords entre ces sections pourront notamment être conçus pour être désaccouplés de ces extrémités avant le relevage des mangeoires et ré-accouplées après que les mangeoires auront été replacées en position d'utilisation, les raccords continuant de centrer et de guider les extrémités des sections de tubes convoyeurs.

### 5. Liste des figures

L'invention, ainsi que les différents avantages qu'elle présente, seront plus facilement compris, grâce à la description qui va suivre de deux modes non limitatifs de réalisation de celle-ci donnés en référence aux dessins dans lesquels :
- la figure 1 est une vue générale d'une ligne d'alimentation d'une installation pour l'alimentation de volailles équipant un bâtiment d'élevage selon la présente invention ;
- la figure 2 est une vue en coupe transversale longitudinale d'un détail de la figure 1 montrant le raccordement de deux portions du tube convoyeur de la ligne d'alimentation représentée sur celle-ci ;
- la figure 3 est une vue de côté du raccord tubulaire montré à la figure 2 ;
- la figure 4 est une vue en perspective des différents éléments constituant le raccordement de deux portions du tube convoyeur de la ligne d'alimentation représenté à la figure 2 ;
- la figure 5 est une vue d'une partie de l'installation représentée à la figure 1 sur laquelle un bras de levier est mis en oeuvre ;
- la figure 6 est une vue en perspective d'une partie de la ligne d'alimentation représentée à la figure 1 sur laquelle les moyens formant levier sont mis en oeuvre;
- la figure 7 est une vue partielle d'une installation incluant des moyens formant levier selon l'art antérieur ;
- la figure 8 est une vue en perspective de différents éléments constituant un raccordement de deux portions du tube convoyeur d'une ligne d'alimentation d'une installation pour l'alimentation de volailles d'un second mode de réalisation de l'invention.

### 6. Description de modes de réalisation de l'invention

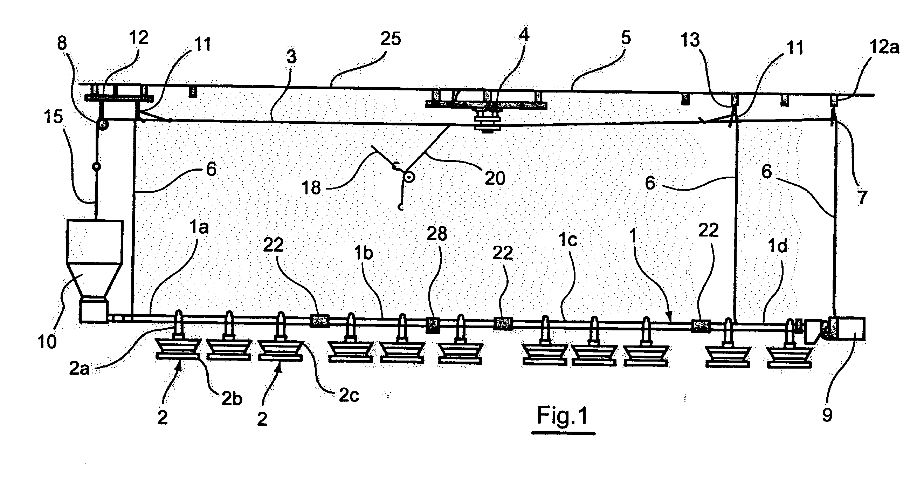

En référence à la figure 1, l'installation d'alimentation de volailles représentée comprend une ligne d'alimentation incluant un tube convoyeur 1 sur lequel est fixée une pluralité de mangeoires 2. Ce tube convoyeur 1 et les mangeoires 2 associées sont relevables grâce à un système de câblerie incluant un câble principal 3 qui peut être actionné par un treuil 4 fixé au plafond 25 du bâtiment d'élevage. Les mangeoires 2 présentent chacune une assiette 2b surmontée d'une réserve d'aliment 2c et d'un tube 2a.

Le tube convoyeur d'aliment 1 est relié à l'une de ses extrémités à une trémie 10 dans laquelle est stocké de l'aliment pour volaille. A l'extrémité opposée de ce tube convoyeur 1 un moteur 9 est prévu pour faire tourner, à la demande, une vis sans fin (non représentée) présente à l'intérieur du tube permettant d'extraire de la trémie 10 de l'aliment pour volailles et de le distribuer dans les mangeoires 2. A cet effet, ce tube convoyeur 1 est pourvu d'orifices (non représentés) permettant de déverser les quantités d'aliments apportés par la vis sans fin dans les assiettes 2b des mangeoires via le tube 2a de celles-ci. Le câble principal 3 est relié, par l'intermédiaire de poulies principales 7 et 8, d'une part à l'extrémité du tube convoyeur 1, au niveau de laquelle est prévue le moteur 9, et d'autre part à une chaînette 15 supportant la trémie 10 prévue à l'autre extrémité du tube convoyeur 1. La poulie principale 8 est suspendue à un support 12 solidement arrimé au plafond 25 de l'élevage, tandis que la poulie principale 7 est reliée également à un support 12a arrimé à ce même plafond. Des câbles de suspension 6 relient par ailleurs ce tube convoyeur 1 au câble principal 3 par l'intermédiaire de poulies de renvoi 11. Pour les besoins de clarté de la description, seuls trois câbles de suspension 6 ont été représentés. Toutefois, ces câbles de suspension sont répartis de façon sensiblement uniforme tout le long de la ligne d'alimentation. Les poulies 7, 8, 11 sont fixées au plafond 25 du bâtiment d'élevage par l'intermédiaire de câblots 13.

Le tube convoyeur 1 et les mangeoires associées 2 de la ligne d'alimentation de l'installation représentée à la figure 1 peuvent être relevés en actionnant le treuil 4. Celui-ci permet l'enroulement et le déroulement du câble principal 3. Plus précisément, en actionnant le treuil 4 de façon tel qu'il provoque l'enroulement du câble principal 3, cet enroulement provoque la montée vers le plafond du tube convoyeur 1 et des mangeoires 2 ainsi que la montée de la trémie 10 et du moteur 9 prévus aux extrémités du tube convoyeur 1.

Inversement, l'actionnement du treuil 4 de façon à dérouler le câble principal 3, permet l'abaissement du tube convoyeur 1 et des mangeoires 2 ainsi que celui de la trémie 10 et du moteur 9.

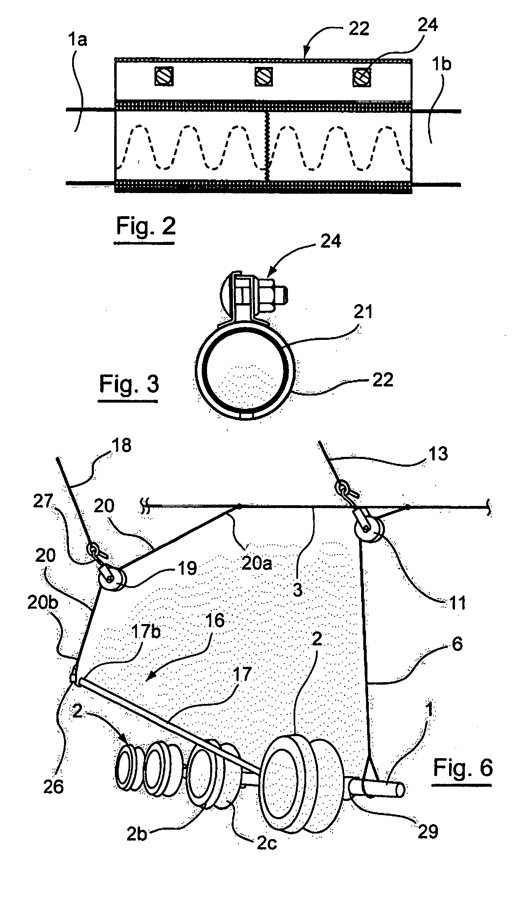

D'une façon classique, le tube convoyeur 1 est constitué de plusieurs portions de tube 1a, 1b, 1c et 1d en acier galvanisé. Ces différentes portions de tubes présentent le même diamètre et sont raccordées entre elles grâce à des raccords tubulaires 22 qui seront décrits ci-après plus en détails en référence aux figures 2, 3 et 4.

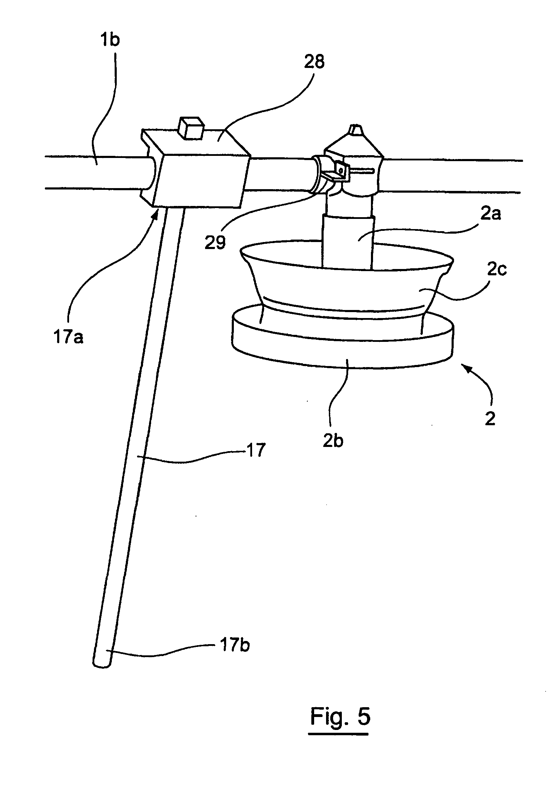

Un ensemble formant levier, qui sera quant à lui décrit plus en détails en référence aux figures 5 et 6, équipe par ailleurs l'installation représentée à la figure 1. Cet ensemble formant levier comprend :
une prise de levier 28 solidarisée fixement au tube convoyeur 1,
un câble de liaison 20 relié au câble principal 3,
et un bras de levier (non représenté sur la figure 1).

En référence aux figures 2, 3 et 4, chaque raccord tubulaire 22 est constitué d'un tube réalisé par enroulement d'un feuillard en acier inoxydable, et pourvu de moyens de serrage 24 permettant de serrer ce raccord tubulaire sur les extrémités de deux portions de tube 1a et 1b du tube convoyeur. Les moyens de serrage en question sont, dans ce présent mode de réalisation, constitués par des boulons.

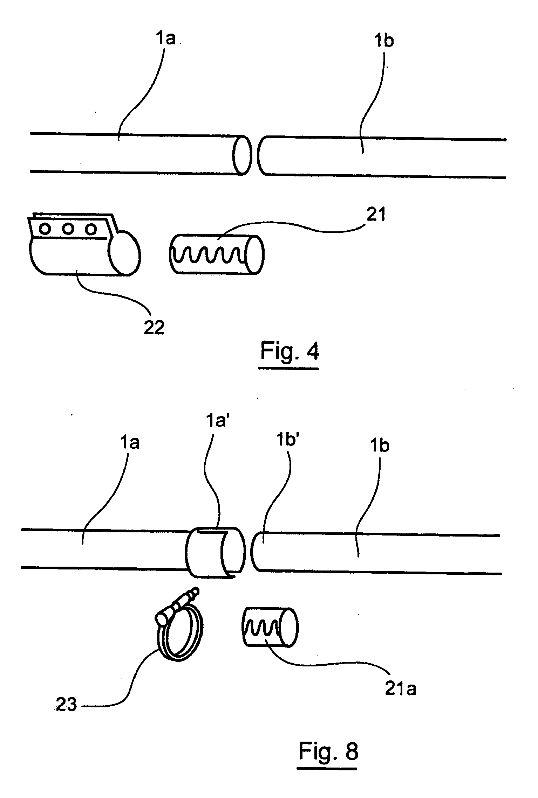

Chaque raccord tubulaire 22 est équipé sur sa paroi intérieure d'un joint anti-rotation. Dans le présent mode de réalisation, ce joint est constitué par un matériau élastomère, à savoir un matériau SBR. Ce joint présente une épaisseur à l'état non comprimé de 3 mm, et est pourvu de très fines aspérités sur sa surface extérieure. Il peut être réalisé à partir d'une couche plane de matériau, par exemple en dotant celle-ci de bords en vaguelettes, ladite plaque pouvant ensuite être conformée sous forme de cylindre et insérée dans le raccord tubulaire 22 tel que représenté à la figure 4. Les bords en vaguelettes permettent d'éviter le glissement du joint avant l'installation du raccord sur le tube. Une fois positionnée sur la jonction entre deux portions de tube 1a et 1b du tube convoyeur 1, le raccord tubulaire 22 pourvu du joint d'étanchéité 21 peut être serré sur cette jonction en actionnant les boulons des moyens de serrage 24. En référence aux figures 5 et 6, l'ensemble formant levier 16 de l'installation représentée à la figure 1 est décrit plus en détails.

Cet ensemble formant levier 16, comprend une prise de levier 28 solidarisée fixement à une portion 1b du tube convoyeur. Cet ensemble comprend par ailleurs un bras de levier 17 dont une des extrémités 17a est destinée à être fixée à la prise de levier 28 comme représenté à la figure 5. En référence à la figure 6, l'autre extrémité 17b du bras de levier est destinée à être solidarisée par l'intermédiaire d'un crochet 26 à une extrémité 20b d'un câble de liaison 20 relié par l'autre de ses extrémités 20a au câble principal 3 de la ligne d'alimentation par l'intermédiaire d'une poulie 19. Cette poulie 19 est reliée par l'intermédiaire d'un crochet 27 à un câblot 18 fixé au plafond du bâtiment d'élevage.

Comme représentées sur la figure 5, les mangeoires 2 sont équipées de butées 29 grâce auxquelles elles sont entraînées en rotation par la rotation du tube convoyeur 1 sur lui-même.

Cette rotation du tube convoyeur sur lui-même est mise en oeuvre grâce à l'ensemble formant levier 16 pour placer concomitamment l'ensemble des mangeoires 2 en position de nettoyage telle que représentée à la figure 6. Pour ce faire, l'extrémité 17a du bras de levier 17 est d'abord introduite par un opérateur dans la prise de levier 28 comme indiqué à la figure 5. L'opérateur actionne ensuite le bras de levier en exerçant une force vers le haut sur l'autre extrémité 17b du bras de levier 17. Cette force entraîne en rotation le tube convoyeur 1 et l'ensemble des mangeoires grâce aux butées 29 et est exercée jusqu'à ce que les mangeoires se retrouvent en position de nettoyage selon laquelle leur assiette 2b est essentiellement perpendiculaire au sol, correspondant à un positionnement du bras selon un angle d'environ +30 degrés par rapport à l'horizontale. L'opérateur, fixe alors l'extrémité 17b du bras de levier à l'extrémité 20b du câble de liaison 20 grâce au crochet 26. Dans la position de nettoyage ainsi adoptée (voir figure 6), les assiettes 2b et les réserves d'aliments 2c des mangeoires peuvent être aisément nettoyées par un opérateur grâce à l'utilisation d'un jet d'eau.

Le câble 20 étant relié au câble principal 3, il est possible d'agir sur le bras de levier 17 quelle que soit la hauteur du tube convoyeur dans l'installation.

De plus, le bras de levier n'étant pas trop redressé lorsque les mangeoires sont mises en position de nettoyage, il est possible d'utiliser l'ensemble formant levier même dans les bâtiments d'élevage bas de plafond. En pratique on recherchera préférentiellement une inclinaison du bras de levier en position de nettoyage des mangeoires inférieure à + 45 ° par rapport à l'horizontale.

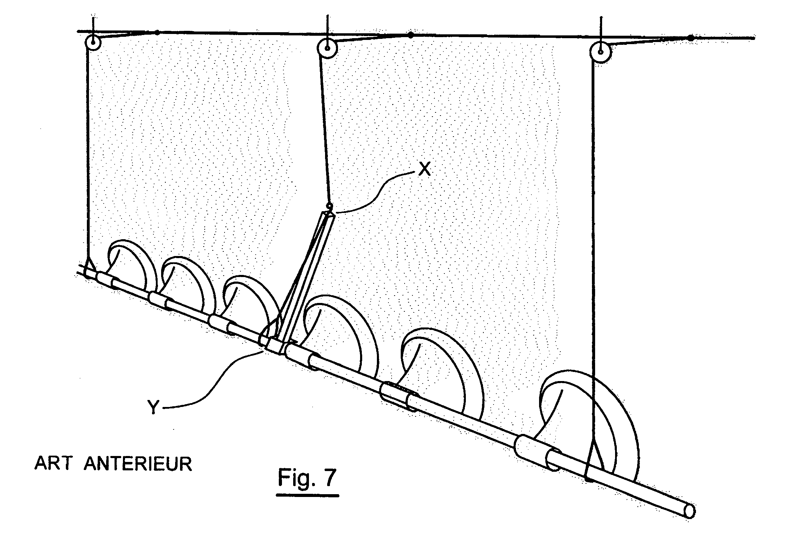

Un tel ensemble formant levier présente encore un autre avantage par rapport à l'art antérieur tel que représenté à la figure 7, selon lequel l'extrémité du bras de levier doit être fixée, en position de nettoyage des mangeoires, à un des câbles de suspension du tube convoyeur. Plus précisément, selon cet art antérieur, l'extrémité du bras de levier doit être fixée à un point X du câble de suspension prévu à une distance du point d'accrochage Y de ce tube de suspension au tube convoyeur correspondant à peu près à la longueur du bras de levier.

Cet art antérieur présente le premier inconvénient d'imposer un positionnement quasi vertical du bras de levier en position de nettoyage des mangeoires comme représenté à la figure 7. Cet inconvénient est évité grâce à l'invention.

De plus, cet antérieur implique que le câble de suspension auquel est accroché le bras de levier ploie sous l'effet du poids des mangeoires et du tube convoyeur comme cela apparaît également sur la figure 7. Pour contrer ce ploiement et faire en sorte que les assiettes des mangeoires soient dans une position sensiblement perpendiculaire au sol dans la position de nettoyage des mangeoires, il est nécessaire d'exercer sur ce bras de levier une force supérieure à celle exercée sur le bras de levier selon l'invention du fait que celui-ci est relié à une extrémité de câble qui ne provoque pas de ploiement de celui-ci. Selon l'invention, la force exercée sur le bras de levier étant plus faibles que dans l'art antérieur, les risques de mauvaise transmission de la force de rotation de la portion de tube pourvue de la prise de levier au reste du tube convoyeur se trouvent, grâce à l'invention, diminués.

Comme il a déjà précisé, et en référence à la figure 8, les portions de tube constituant le tube convoyeur 1 pourront, au lieu de présenter le même diamètre sur toute leur longueur, présenter des extrémités mâle 1b' et femelle 1a' autorisant l'emboîtement de ces extrémités l'une dans l'autre. Selon un tel mode de réalisation, le joint anti-rotation 21a pourra être inséré entre l'extrémité mâle et l'extrémité femelle de façon à s'intercaler entre les surfaces métalliques de celles-ci. Un collier de serrage 23 pourra être utilisé pour sécuriser la jonction de deux portions de tube. Le joint anti-rotation 21a permettra de minimiser les risques de rotation des portions du tube convoyeur les unes par rapport aux autres.

## Revendications

1. Installation pour l'alimentation de volailles destinée à équiper un bâtiment d'élevage incluant au moins une ligne d'alimentation relevable grâce à un treuil (4) actionnant un câble principal (3) auquel ladite ligne d'alimentation est reliée, ladite ligne d'alimentation comprenant une pluralité de mangeoires (2) fixées à un tube convoyeur d'aliment (1) et des moyens de distribution (9,10) dudit aliment dans lesdites mangeoires (2), ledit tube convoyeur d'aliment (1) étant relié audit câble principal (3) par des câbles de suspension (6) et étant composé d'une pluralité de portions de tube (1a,1b,1c,1d) reliées les unes aux autres, ladite installation étant de plus pourvue de moyens permettant la mise en rotation sur lui même dudit tube convoyeur, ou d'une section de celui-ci, de façon à organiser le pivotement desdites mangeoires (2), lesdits moyens de mise en rotation comprenant au moins un ensemble formant levier (16) incluant une barre de levier (17) dont une extrémité (17a) est destinée à coopérer avec une prise de levier (28) fixée audit tube convoyeur (1),
ladite installation étant **caractérisée en ce qu**'elle comprend un câble de liaison (20) relié à l'une de ses extrémités (20a) au câble principal (3) et destiné à être relié par l'autre de ses extrémités (20b) à l'autre extrémité (17b) dudit bras de levier (17), ledit câble de liaison (20) étant indépendant des câbles de suspension (6) du tube convoyeur (1).

2. Installation selon la revendication 1 **caractérisée en ce que** ledit câble de liaison (20) est relié audit câble principal par l'intermédiaire d'une poulie (19).

3. Installation selon l'une quelconque des revendications 1 ou 2 **caractérisée en ce que** des joints anti-rotation (21 ; 21a) sont prévus au niveau des jonctions entre lesdites portions de tube (1a,1b,1c,1d).

4. Installation selon la revendication 3 **caractérisée en ce que** lesdits joints anti-rotation (21 ; 21a) sont constitués en un matériau choisi dans le groupe constitué par les matériaux élastomères et les polymères souples.

5. Installation selon la revendication 3 **caractérisée en ce que** lesdits joints anti-rotation (21 ; 21a) sont constitués en un matériau choisi dans le groupe constitué par le SBR (styrene butadiene rubber), l'EPDM (éthylène propylène diène monomère), les copolymères de polypropylène et les PVC souples.

6. Installation selon l'une quelconque des revendication 3 à 5 **caractérisée en ce que** lesdites portions de tube (1a,1b,1c,1d) dudit tube convoyeur présentent des extrémités mâle et femelle et **en ce que** ledit joint anti-rotation (21a) est installé entre l'extrémité male (1b') d'une portion de tube (1b) et l'extrémité femelle (1a') d'une autre portion de tube (1a) qui lui est associée.

7. Installation selon l'une quelconque des revendications 3 à 6 **caractérisée en ce que** lesdites portions de tube (1a,1b,1c,1d) dudit tube convoyeur sont de même diamètre et reliées entre elles par des raccords tubulaires métalliques (22) équipés dudit joint anti-rotation (21).

8. Installation selon l'une quelconque des revendications 3 à 7 **caractérisée en ce que** ledit joint anti-rotation (21 ; 21a) présente, sur au moins une de ses faces, des aspérités.

## Patentansprüche

1. Anlage zum Füttern von Geflügel, die dazu bestimmt ist, in einem Aufzuchtgebäude mit mindestens einer Futterlinie, die durch eine Winde (4) angehoben werden kann, die ein Hauptkabel (3) betätigt, mit dem die Futterlinie verbunden ist, verwendet zu werden, wobei die Futterlinie eine Vielzahl von an einem Futterförderrohr (1) befestigten Futtertrögen (2) und Mittel (9, 10) zum Verteilen des Futters in die Futtertröge (2) umfasst, wobei das Futterförderrohr (1) mit dem Hauptkabel (3) durch Aufhängungskabel (6) verbunden ist und aus einer Vielzahl von miteinander verbundenen Rohrabschnitten (1a, 1b, 1c, 1d) besteht, wobei die Anlage ferner mit Mitteln versehen ist, die ein selbsttätiges Drehen des Förderrohrs oder eines Abschnitts desselben ermöglichen, um das Schwenken der Futtertröge (2) zu organisieren, wobei die Mittel zum Drehen mindestens eine einen Hebel (16) bildende Einheit aufweisen, umfassend eine Hebelstange (17), deren eines Ende (17a) dazu bestimmt ist, mit einem am Förderrohr (1) befestigten Hebeleingriff (28) zusammenzuwirken,
wobei die Anlage **dadurch gekennzeichnet ist, dass** sie ein Verbindungskabel (20) umfasst, das an einem seiner Enden (20a) mit dem Hauptkabel (3) verbunden und dazu bestimmt ist, mit dem anderen seiner Enden (20b) mit dem anderen Ende (17b) des Hebelarms (17) verbunden zu werden, wobei das Verbindungskabel (20) von den Aufhängungskabeln (6) des Förderrohrs (1) unabhängig ist.

2. Anlage nach Anspruch 1, **dadurch gekennzeichnet, dass** das Verbindungskabel (20) mit dem Hauptkabel durch eine Rolle (19) verbunden ist.

3. Anlage nach einem der Ansprüche 1 oder 2, **dadurch gekennzeichnet, dass** Antirotationselemente (21; 21a) im Bereich der Verbindungen zwischen den Rohrabschnitten (1a, 1b, 1c, 1d) vorgesehen sind.

4. Anlage nach Anspruch 3, **dadurch gekennzeichnet, dass** die Antirotationselemente (21; 21a) aus einem Material bestehen, ausgewählt aus der Gruppe der Elastomere und weichen Polymere.

5. Anlage nach Anspruch 3, **dadurch gekennzeichnet, dass** die Antirotationselemente (21; 21a) aus einem Material gebildet sind, ausgewählt aus der Gruppe, die von SBR (Styrolbutadienrubber), EPDM (Ethylenpropylendienmonomer), den Polypropylencopolymeren und den weichen PVC gebildet ist.

6. Anlage nach einem der Ansprüche 3 bis 5, **dadurch gekennzeichnet, dass** die Rohrabschnitte (1a, 1b, 1c, 1d) des Förderrohrs männliche und weibliche Enden aufweisen, und dass das Antirotationselement (21 a) zwischen dem männlichen Ende (1b') eines Rohrabschnitts (1b) und dem weiblichen Ende (1a') eines weiteren Rohrabschnitts (1a), der mit ihm verbunden ist, angeordnet ist.

7. Anlage nach einem der Ansprüche 3 bis 6, **dadurch gekennzeichnet, dass** die Rohrabschnitte (1a, 1b, 1c, 1d) des Förderrohrs denselben Durchmesser aufweisen und miteinander durch metallische Rohrverbinder (22) verbunden sind, die mit dem Antirotationselement (21) versehen sind.

8. Anlage nach einem der Ansprüche 3 bis 7, **dadurch gekennzeichnet, dass** das Antirotationselement (21; 21a) auf mindestens einer ihrer Seiten Unebenheiten aufweist.

## Claims

1. Poultry-feeding plant intended for equipping a rearing building, including at least one feeding line which can be lifted up with the aid of a winch (4) which actuates a main cable (3) to which the said feeding line is connected, the said feeding line comprising a plurality of feeding troughs (2) fixed to a feed-conveying tube (1) and means (9, 10) for distributing the said food into the said feeding troughs (2), the said feed-conveying tube (1) being connected to the said main cable (3) by suspension cables (6) and being made up of a plurality of tube portions (1a, 1b, 1c, 1d) which are connected to one another, the said plant being provided, moreover, with means which make it possible to cause the said conveying tube, or a section of the latter, to rotate on itself so as to arrange for the pivoting of the said feeding troughs (2), the said rotation-causing means comprising at least one assembly forming a lever (16) including a lever bar (17) of which one end (17a) is intended to cooperate with a lever grip (28) which is fixed to the said conveying tube (1),
the said plant being **characterised in that** it comprises a linking cable (20) which is connected, at one of its ends (20a), to the main cable (3) and is intended to be connected, by the other of its ends (20b), to the other end (17b) of the said lever arm (17), the said linking cable (20) being independent of the suspension cables (6) of the conveying tube (1).

2. Plant according to Claim 1, **characterised in that** the said linking cable (20) is connected to the said main cable via a pulley (19).

3. Plant according to either of Claims 1 or 2, **characterised in that** anti-rotation joints (21; 21a) are provided at the junctions between the said tube portions (1a, 1b, 1c, 1d).

4. Plant according to Claim 3, **characterised in that** the said anti-rotation joints (21; 21a) are made up of a material chosen from the group constituted by elastomer materials and flexible polymers.

5. Plant according to Claim 3, **characterised in that** the said anti-rotation joints (21; 21a) are made up of a material chosen from the group constituted by SBR (styrene/butadiene rubber), EPDM (ethylene/propylene/ diene monomer), polypropylene copolymers and flexible PVC's.

6. Plant according to any of Claims 3 to 5, **characterised in that** the said tube portions (1a, 1b, 1c, 1d) of the said conveying tube have male and female ends, and **in that** the said anti-rotation joint (21a) is installed between the male end (1b') of one tube portion (1b) and the female end (1a') of another tube portion (1a) which is associated with it.

7. Plant according to any of Claims 3 to 6, **characterised in that** the said tube portions (1a, 1b, 1c, 1d) of the said conveying tube are of the same diameter and are connected to one another by tubular metal connectors (22) equipped with the said anti-rotation joint (21).

8. Plant according to any of Claims 3 to 7, **characterised in that** the said anti-rotation joint (21; 21a) has rough areas on at least one of its face.
